# EUROPÄISCHE PATENTSCHRIFT

(11) **EP 0 702 182 B1**
(45) Veröffentlichungstag und Bekanntmachung des Hinweises auf die Patenterteilung: **08.07.1998**
(21) Anmeldenummer: 95113942.7
(22) Anmeldetag: 05.09.1995
(51) Int. Cl.: F16L 11/11, F16L 11/118

(54) **Polymerrohrleitung und Verfahren zu seiner Herstellung**
Polymeric pipe and method of its manufacture
Conduit en polymère et son procédé de fabrication

(30) Priorität: 13.09.1994 DE 4432584
(43) Veröffentlichungstag der Anmeldung: 20.03.1996
(73) Patentinhaber: EMS-INVENTA AG, 8001 Zürich (CH)
(72) Erfinder: Pfleger, Wolfgang, CH-7015 Tamins (CH); Seidl, Josef, Dipl.-Ing., 8200 Gleisdorf (AT)
(74) Vertreter: Müller-Boré & Partner Patentanwälte

(56) Entgegenhaltungen:
- CH-A- 463 210
- DE-B- 2 124 094
- DE-C- 4 330 855
- DE-U- 9 001 467
- US-A- 4 424 834

## Beschreibung

Die Erfindung betrifft den in den Patentansprüchen angegebenen Gegenstand.

Die Erfindung betrifft insbesondere eine Polymerleitung, die eine neue Ausformung ihrer Wellgeometrie aufweist. Die Polymerleitung ist mindestens in einem Teilstück gewellt und die durch die Wellen gebildeten Ringe verlaufen um die Rohrleitungsachse. Die erfindungsgemäße Polymerleitung weist eine hohe Flexibilität, Berstdruckbeständigkeit und eine geringe Längenausdehnung auf.

Eine besonders bevorzugte Ausführungsform bzw. ein Anwendungsbereich der erfindungsgemäßen Polymerleitungen sind Kühlflüssigkeitsleitungen im Kraftfahrzeugbau.

Die erfindungsgemäße Polymerleitung ist durch Coextrusion eines Polymerrohres und anschliessender Ausbildung der Wellungen samt Abflachungen durch Blas- oder Saugformen herstellbar. Alternativ ist die erfindungsgemäße Polymerleitung durch Extrusionsblasformen, Coextrusionsblasformen, sequentielles Blasformen mit oder ohne Schlauchmanipulationen herstellbar.

Wellrohre und Wellschläuche sind in der Praxis in verschiedenen Ausführungsformen bekannt. Sie können aus Metall oder aus Kunststoff bestehen. Solche Rohre und Sch!äuche finden u.a. in der Automobilindustrie Verwendung. So sind schon aus der DE-A-40 00 434 Leitungen mit gewellter Wandung bekannt. Diese haben jedoch den Nachteil, daß sich ihre Wellungen nicht unter Zug von außen, sondern auch unter Druck von innen aufweiten lassen. Speziell für Kühlflüssigkeitsleitungen führen aber sich wiederholende Druckschwankungen, die in der Regel auch von starken Temperaturschwankungen begleitet sind, über die dadurch ausgelösten Wechselbeanspruchungen zu Materialermüdungen und in der Folge zu vorzeitigem Versagen der Leitungen.

Darüber hinaus werden nach den engen Toleranzen der Automobilindustrie Rohre verlangt, deren Längenänderung nach Erwärmung und Druckbelastung so gering wie möglich ist. Sie ermöglichen dabei eine große Freiheit in der Anordnung der Leitungen, da sie durch die wellenförmige Gestalt flexibel sind und mit relativ kleinen Radien gebogen werden können.

Durch die wellenförmige Gestalt weisen solche Rohre oder Schläuche jedoch den Nachteil auf, daß sie unter Zugbelastung in Längsrichtung sowie unter Innendruckbeaufschlagung relativ große Längenveränderungen zulassen. Solche Längenveränderungen sind jedoch in vielen Fällen unerwünscht.

Der Erfindung liegt daher die Aufgabe zugrunde, druckbeaufschlagbare Polymerrohrleitungen mit hoher Flexibilität, Berstdruckbeständigkeit und geringer Längenausdehnung zu entwickeln, die eine neue Geometrie aufweisen und die vorgenannten Nachteile des Standes der Technik vermeiden, sowie Verfahren zu deren Herstellung.

Diese Aufgabe wird durch die Polymerrohrleitung gemäß Anspruch 1 bzw. durch die Verfahren gemäß Anspruch 30 bzw. gemäß Anspruch 31 gelöst.

In den Unteransprüchen sind vorteilhafte Ausführungsformen der Erfindung enthalten.

Durch die neue Geometrie, d.h. durch die Ausformung der Wellen, d.h. dadurch, daß die Wellen (zumindest teilweise) keinen kreisförmigen Querschnitt aufweisen, sondern in ovaler Form oder in Form einer Ellipse bzw. in der Form eines an zumindest einer Stelle abgeflachten Kreises ausgebildet sind, werden folgende überraschenden Vorteile gegenüber Wellrohren nach dem Stand der Technik, welcher in DE-GM 93 19 190.1, DE-GM 93 19 879.5 und DE-GM 94 02 180.5 beschrieben ist, d.h. gegenüber normalen Wellrohren bzw. solchen, die stegartige Verbindungen zwischen den Wellen aufweisen, erzielt:
- Bessere Effizienz der Versteifung in Längsrichtung und damit geringere Längenänderung bei Innendruckbelastung,
- Keine Veränderung des minimalen Biegeradius gegenüber der Ausgangswellform, insbesondere bei Ausführungsformen, bei denen die Abflachung fortlaufend um einen definierten Winkel versetzt ist,
- Keine verstärkte Kollabierneigung, wie bei Rippen- und sickenversteiften Rohren,
- 10 % höhere Berstdruckfestigkeit.

In einer besonderen erfindungsgemäßen Ausführungsform der Wellengeometrie ist jede Welle zumindest an einer Seite abgeflacht bzw. als Ellipse oder oval ausgebildet. Insbesondere kann die Abflachung bzw. die kurze Halbachse der Ellipse bzw. des Ovals fortlaufend um einen definierten Winkel versetzt sein.

Die erfindungsgemäßen Wellrohre weisen eine um 47 % geringere Längenausdehnung bei gleicher Flexibilität und Biegbarkeit sowie einen 15 % höheren Berstdruck auf. Dies geht aus der folgenden Tabelle 1 hervor. Dabei wurden mehrere Profilformen an Monorohren aus Grilamid L25 gleicher Wandstärke (1 mm) untersucht:

**Tabelle 1**

| | Längenausdehnung bei 2 bar Innendruck und 125 °C [%] | minimaler Biegeradius [mm] | Kollabierneigung | Berstdruck bei 100 °C [bar] |
|---|---|---|---|---|
| Wellprofil gemäß Fig. 1 (GAMMA) (Stand der Technik) | 39,3 ± 2 | 15 | gering | 8,7 ± 0,4 |
| Wellprofil gemäß Fig. 2 (GAMMA RIPPE) * | 36,1 ± 2 | 30 | groß | 7,2 ± 0,3 |
| Wellprofil gemäß Fig. 3 (erfindungsgemäß) (GAMMA GABELSCHLÜSSEL) | 21 ± 2 | 15 | gering | 10,0 ± 0,4 |

| | | | | |
|---|---|---|---|---|
| * Stand der Technik | | | | |

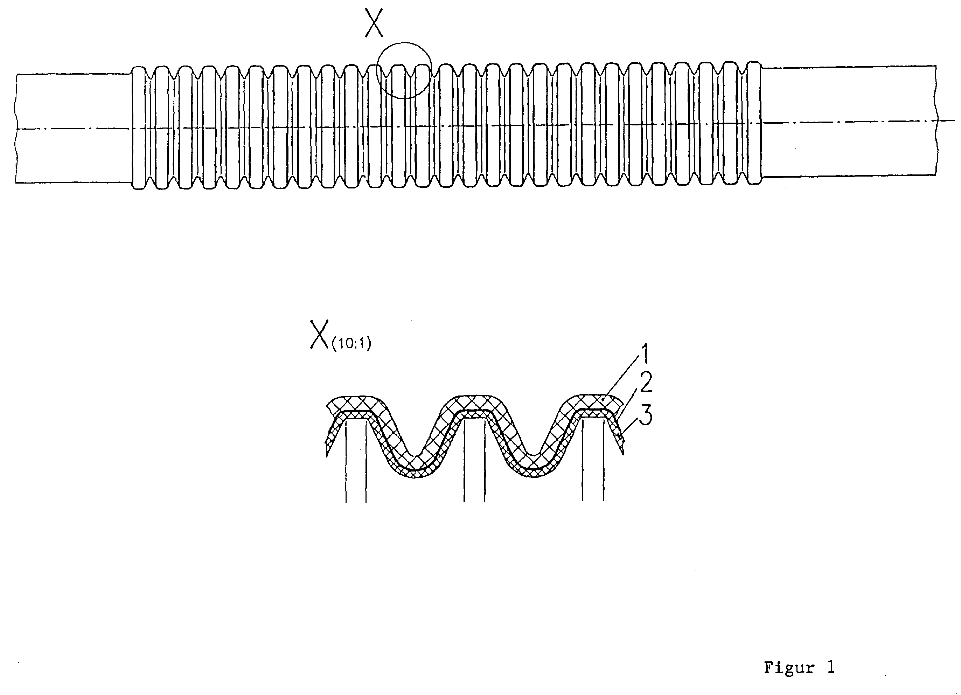

In den Figuren sind verschiedene Wellprofile gezeigt, wobei
- Figur 1: ein Wellrohr nach dem Stand der Technik mit einem sogenannten "GAMMA"-Profil veranschaulicht,

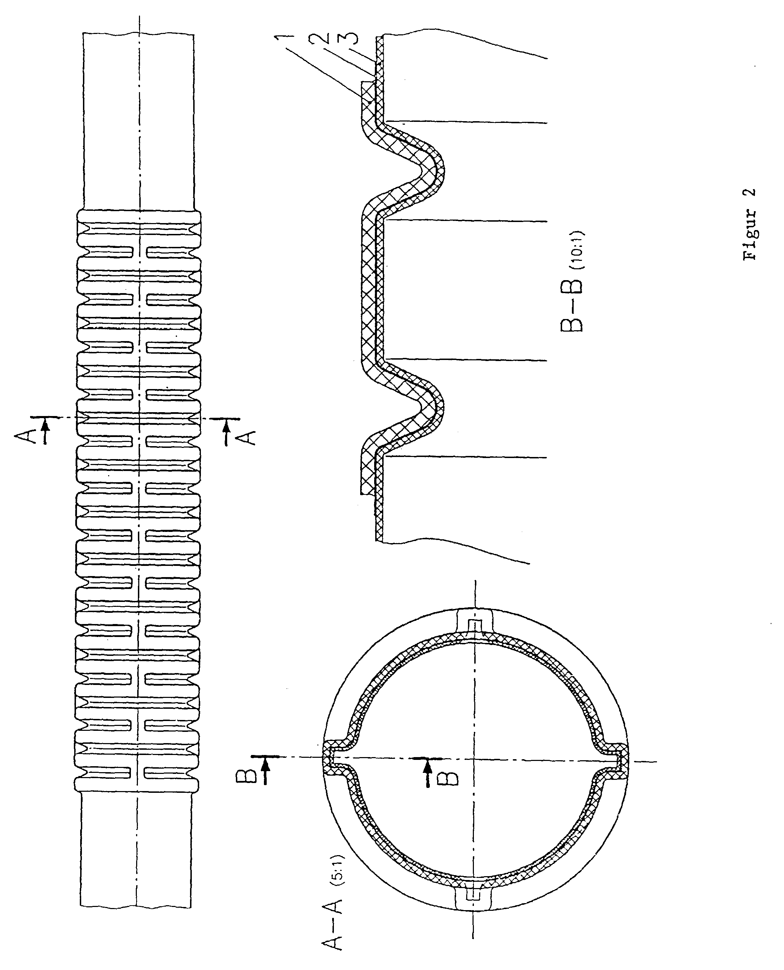

- Figur 2: ein Wellrohr nach dem Stand der Technik mit einem sogenannten Rippenprofil "R" (GAMMA-RIPPE gemäß DE-GM 94 02 180) zeigt,

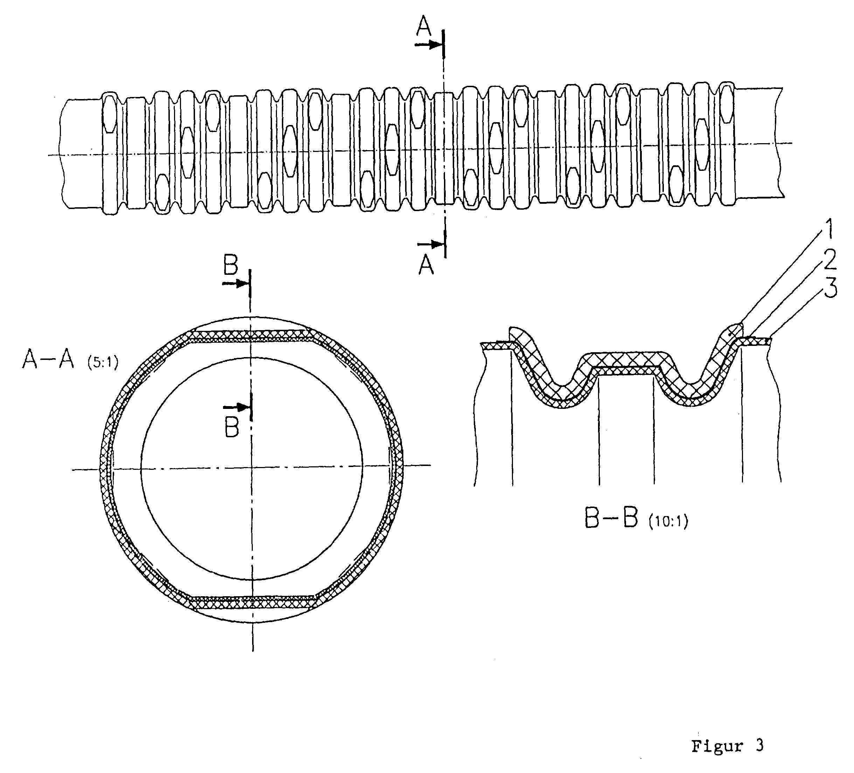

- Figur 3: eine Ausführungsform einer erfindungsgemäßen Polymerleitung mit einem Wellprofil: "GAMMA GABELSCHLÜSSEL" zeigt, und
- Figur 4: ein weiteres erfindungsgemäßes Wellprofil zeigt, bei dem die Welle als Ellipse ausgebildet ist.

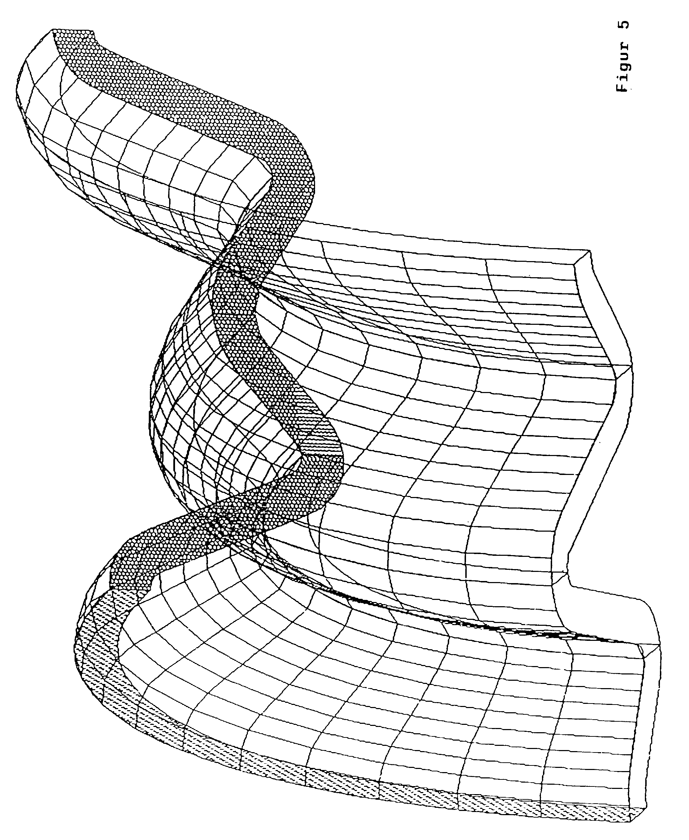

- Figur 5: ein erfindungsgemäßes einschichtiges Rohr nach der Art von Figur 4 zeigt, das die Grundlage für Berechnungen mit der Finiten Elemente Methode (FEM) war.

In den Figuren ist die Außen - bzw. die Zwischen- bzw. die Innenschicht mit (1) bzw. (2) bzw. (3) bezeichnet.

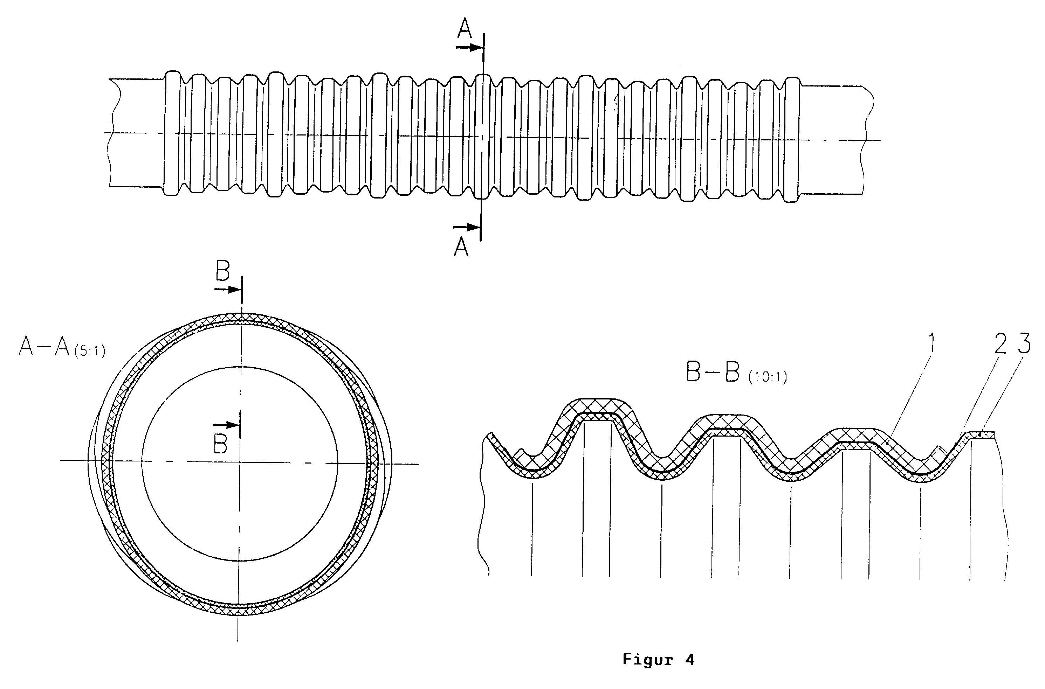

Die Ausführungsform gemäß Figur 4 weist gemäß einer Berechnung mit Finite Elemente Methoden (FEM) ein noch um 10% verbessertes Ergebnis hinsichtlich Längenänderung auf.

Die erfindungsgemäßen Polymerleitungen sind durch Extrusion oder Coextrusion ihrer Polymeren zu Rohren mit einschließender Ausbildung der Wellungen und Stege durch Saug- und Blasformen herstellbar.

Die erfindungsgemäße Polymerleitung kann auch durch Extrusionsblasverfahren in seinen unterschiedlichen Ausführungsformen hergestellt werden (Sequentielles Extrusionsblasformen, mit oder ohne Schlauchmanipulation).

Diese Verfahren sind Stand der Technik und wurden unter anderem in DE-GM 93 19 190 und DE-GM 93 19 879 beschrieben.

Die Erfindung betrifft insbesondere auch eine druckbeaufschlagbare Polymerleitung, wie z.B. eine Kühlflüssigkeitsleitung für Automobile.

Für diese Anwendung wurden schon Leitungen mit gewellter Wandung vorgeschlagen (DE-PS 40 00 434, EP 0 010 751). Diese haben jedoch den Nachteil, daß sich ihre Wellungen nicht nur unter Zug von außen, sondern auch unter Druck von innen aufweiten lassen.

Speziell für Kühlflüssigkeitsleitungen führen aber sich wiederholende Druckschwankungen, die in der Regel auch von starken Temperaturschwankungen begleitet sind, über die dadurch ausgelösten Wechselbeanspruchungen zu Materialermüdungen und in der Folge zu vorzeitigem Versagen der Leitungen.

Darüberhinaus werden nach den engen Toleranzen der Automobilindustrie Rohre verlangt, deren Längenänderung nach Erwärmung und Druckbelastung so gering wie möglich ist.

Die erfindungsgemäße druckbeaufschlagbare Polymerleitung in ihrer Anwendung als Kühlleitung besteht aus mindestens einer (oder mehreren) Polymerschichten mit insbesondere an den Berührungsflächen der Schichten miteinander verträglichen Polymeren, wobei die Leitung mindestens in einem Teilstück gewellt ist und die durch die Wellen gebildeten Ringe konzentrisch um die Rohrachse verlaufen. Die erfindungsgemäße Polymerleitung weist eine hohe Flexibilität, Hydrolyse-, Berstdruckbeständigkeit und Stabilität gegen Längenausdehnung auf.

Besonders geringe Längenänderung bei druckbeaufschlagten Wellrohren erzielt man mit sehr steifen Materialien. Diese steifen Materialien wie Homopolyamid bzw. Polyphenylensulfid haben den Nachteil, daß sie Körperschall übertragen und akustisch ungünstig sind. In der Automobilindustrie zum Beispiel ist man bestrebt, Geräusche zu minimieren. Durch Coextrusion von besonders weichen Materialien aus der Gruppe der thermoplastischen Elastomere kann man die Geräuschentwicklung reduzieren in der Weise, daß diese weichen Materialien an der Oberfläche des Rohres sind.

Bei Benzin-Einfüllstutzen ist es wichtig, daß das Wellrohr neben großer Flexibilität Bereiche großer Dehnbarkeit und Bereiche mit reduzierter Dehnbarkeit aufweist. Die erfindungsgemäße Polymerleitung erfüllt dies in besonders vorteilhafter Form, indem eine spezielle flexible Ausführung der Wellform in Bereichen, wo große Dehnbarkeit verlangt wird, angeordnet wird, an Stellen jedoch, wo behinderte Dehnbarkeit verlangt wird, die erfindungsgemäße Ausführung angeordnet wird.

Da die erfindungsgemäße Polymerleitung sowohl bei druckbeaufschlagten wie auch bei Unterdruck-beaufschlagten Systemen Vorteile gegenüber gewellten Leitungen gemäß des Standes der Technik aufweist, kann die erfindungsgemäße Polymerleitung bevorzugt auch in Unterdrucksystemen wie Luftführungen im Motoreneinlaßbereich verwendet werden.

Die erfindungsgemäßen Polymerleitungen sind in vorteilhafter Weise aus Polymerschichten mit verschiedenen Funktionen aufgebaut, z.B. mit einer gegenüber dem Leitungsmedium inerten Innenschicht und einer gegenüber Druck und mechanischen Einflüßen beständigen Schicht.

Zusätzlich kann eine sehr weiche Polymerschicht zur Geräuschdämpfung an der Oberfläche eingesetzt werden. Dieses weiche Polymer kann aus der Gruppe der thermoplastischen Elastomere (TPE) auf Basis Polyamid TPE-A, Polyester (TPE-E), Polyolefinen (TPE-O, TPE-V) sowie Styrol (TPE-S) ausgewählt sein.

Bevorzugt sind Monorohre oder Leitungen mit zwei oder mehreren Schichten aus miteinander verträglichen Polymeren. Ausführungsformen mit Schichten aus Polymeren, die unbefriedigende Verträglichkeit zueinander zeigen, enthalten vorteilhafterweise eine Zwischenschicht aus Polymeren, die mit denen der benachbarten Schichten verträglich sind. Dafür eignen sich in vorteilhafter Weise Homo- und Copolyolefine, die funktionelle Gruppen enthalten oder aber Blends aus den verschiedenen Polymeren der zu verbindenden Schichten.

Die berstdruckbeständige Schicht besteht bevorzugt aus Polyamiden der Gruppe Homopolyamid, Copolyamid deren Blends oder Mischungen untereinander oder mit anderen Polymeren, wobei Polyamide aus linearen aliphatischen Monomeren mit 6 bis 12 C-Atomen, aromatischen Monomeren, mit 6 bis 12 C-Atomen und/oder cycloaliphatischen Monomeren mit 6 bis 20 C-Atomen bevorzugt sind. Besonders bevorzugt sind Polyamid 6, Polyamid 66 und Polyamid 12.

Die Innenschicht besteht bevorzugt aus Polyolefinen. Dabei sind halogenierte und nicht-halogenierte Homo- und Copolyolefine, ihre Mischungen und ihre Blends besonders bevorzugt, insbesondere solche, die funktionelle Gruppen aufweisen, welche die Verträglichkeit mit der druckbeständigen Schicht bewirken. Falls diese Verträglichkeit nicht gegeben ist, bedarf es der bereits erwähnten Zwischenschicht.

Bevorzugte halogenierte Typen sind fluorierte Homo- oder Copolyolefine, wie PVDF oder ETFE. Verträgliche oder verträglich-machende Polymere sind neben gepfropften Polyolefinen auch solche, die ihre funktionellen Gruppen durch geeignete Copolymerisate, z.B. Acrylsäurederivate und -homologe erhalten haben.

Eine weitere bevorzugte Ausführungsform hat eine Innenschicht aus einem Blend aus einem Homopolyolefin, z.B. Polypropylen mit einem EPDM, das bevorzugt vernetzt ist, eine Zwischenschicht aus einem funktionalisierten Homo- oder Copolyolefin und eine Außenschicht aus Polyamid 12.

Eine besonders vorteilhafte Ausführungsform der erfindungsgemäßen Polymerleitung besteht aus einer Innenschicht, deren Polymer im wesentlichen ein mit alpha-ungesättigter Dicarbonsäure gepfropftes Copolyolefin und deren Außenschicht im wesentlichen Polyamid 12 ist. Eine andere bevorzugte Ausführungsform besteht aus einer Polyvinylidenfluorid-Innenschicht und einer Polyamid 12-Außenschicht. Die in diesem Fall notwendige Zwischenschicht ist vorteilhafterweise ein Blend aus im wesentlichen Polyamid 12 und PVDF.

Eine weitere vorteilhafte Ausführungsform der erfindungsgemäßen Polymerleitung besteht aus einer Innenschicht, deren Polymer im wesentlichen ein Polyphenylensulfid oder dessen Copolymer mit funktionellen Gruppen ist und deren druckbeständige Schicht ein Polyamid 12 ist.

Eine weitere bevorzugte Ausführungsform der erfindungsgemäßen Polymerleitung besteht aus einer Innenschicht aus der Gruppe der Polyester und einer Außenschicht aus Polyamid 6 oder 12.

Eine weitere bevorzugte Ausführungsform kann verwendet werden wenn ein Polymer alleine die Anforderung auf Berstdruckbeständigkeit, Chemikalienbeständigkeit und Barrierewirkung erfüllt. In einem solchen Fall wird vorteilhaft eine sogenannte Monoleitung, eine aus einer Schicht bestehende gewellte Rohrleitung eingesetzt.

Bevorzugte Materialien sind Polyamide, deren Copolyamide sowie deren Blends untereinander sowie mit anderen Polymeren, halogenierte Polyolefine, nicht halogenierte Polyolefine, Polyphenylensulfid, Polyester u.a.

Die Polymeren der einzelnen Schichten können mit verarbeitungs- oder verwendungsbedingten Additiven nach dem Stand der Technik modifiziert sein. Dafür seien im speziellen Stabilisatoren, Weichmacher, Pigmente und Zusätze zur Schlagzähigkeits- oder Leitfähigkeits-Verbesserung genannt.

Die Schichtdicken der einzelnen Schichten der erfindungsgemäßen Ausführungsformen können an die Anforderungen etwa in Bezug auf Barrierewirkung, Berstdruckbeständigkeit oder Schlagzähigkeit angepaßt werden und variieren zwischen 0,05 mm und 3 mm.

## Patentansprüche

1. Polymerrohrleitung aus mindestens einer Polymerschicht, wobei die Leitung mindestens in einem Teilstück gewellt ist, und die durch die Wellen gebildeten Ringe um die Rohrleitungsachse verlaufen, dadurch gekennzeichnet, daß die Ringe zumindest teilweise in ovaler Form oder in Form einer Ellipse oder in Form eines an zumindest einer Seite abgeflachten Kreises ausgebildet sind.

2. Polymerrohrleitung gemäß Anspruch 1, dadurch gekennzeichnet, daß jeder Ring zumindest an einer Seite abgeflacht oder als Ellipse oder als Oval ausgebildet ist.

3. Polymerrohrleitung gemäß Anspruch 1 oder 2, dadurch gekennzeichnet, daß die Abflachung bzw. die kurze Halbachse der Ellipse oder des Ovals von Ring zu Ring fortlaufend um einen definierten Winkel versetzt ist.

4. Polymerrohrleitung gemäß einem der Ansprüche 1 bis 3, dadurch gekennzeichnet, daß sie aus einer druckbeständigen Schicht aus Polymeren, die ausgewählt sind aus der Gruppe, welche Homo- und/oder Copolyamide, Homo-und/oder Copolyester, Polyphenylensulfid (PPS) und/oder dessen Copolymere, Polyvinylidenfluorid (PVDF) und/oder dessen Copolymere, halogenierte und nicht-halogenierte Polyolefine, und/oder deren Copolymere, und Polyphenylenether (PPE) und/oder deren Mischungen bzw. Blends umfaßt, besteht.

5. Polymerrohrleitung gemäß Anspruch 4, dadurch gekennzeichnet, daß der Polyester Polybutylenterephthalat oder Polyethylenterephthalat oder deren Copolymere oder Mischungen bzw. Blends derselben ist.

6. Polymerrohrleitung gemäß Anspruch 4, dadurch gekennzeichnet, daß die Homo- oder Copolyamide aus linearen aliphatischen Monomeren mit 6 bis 12 C-Atomen oder aus cycloaliphatischen Monomeren mit 6 bis 20 C-Atomen aufgebaut ist.

7. Polymerrohrleitung gemäß Anspruch 6, dadurch gekennzeichnet, daß das Homopolyamid ein Polyamid 6, Polyamid 66 oder Polyamid 12 ist, wobei die Polyamide mit verarbeitungs- oder verwendungsbedingten Additiven modifiziert sein können.

8. Polymerrohrleitung gemäß Anspruch 4, dadurch gekennzeichnet, daß das Polyolefin ein Ethylentetrafluorethylen, ein Polypropylen, ein vernetztes oder unvernetztes Polyethylen, wie HDPE, LDPE, LLDPE, Polybuten-1, Poly-4-methylpenten, ist.

9. Polymerrohrleitung gemäß Anspruch 4, dadurch gekennzeichnet, daß das Polymere eine Mischung bzw. ein Blend aus Polyphenylenether und Homo- oder Copolyamiden ist.

10. Polymerrohrleitung gemäß einem der Ansprüche 1 bis 9, dadurch gekennzeichnet, daß sie aus mindestens einer Innenschicht, mindestens einer gegebenenfalls haftvermittelnden Zwischenschicht und mindestens einer Außenschicht besteht, wobei die mindestens eine Zwischenschicht zusätzlich Barrierefunktion haben kann.

11. Polymerrohrleitung gemäß einem der Ansprüche 1 bis 10, dadurch gekennzeichnet, daß sie zumindest aus einer gegenüber dem transportierten Medium inerten Innenschicht und einer gegenüber Druck und mechanischen Einflüssen beständigen Schicht besteht.

12. Polymerrohrleitung gemäß Anspruch 11, dadurch gekennzeichnet, daß die gegenüber Druck und mechanischen Einflüssen beständige Schicht aus einem Homopolyamid oder einem Copolyamid oder aus deren Blends oder Mischungen untereinander oder mit anderen Polymeren besteht.

13. Polymerrohrleitung gemäß Anspruch 12, dadurch gekennzeichent, daß die Homo- oder Copolyamide aus linearen aliphatischen Monomeren mit 6 bis 12 C-Atomen oder aus cycloaliphatischen Monomeren mit 6 bis 20 C-Atomen aufgebaut ist.

14. Polymerrohrleitung gemäß Anspruch 12, dadurch gekennzeichnet, daß das Homopolyamid ein Polyamid 6, Polyamid 66 oder Polyamid 12 ist, wobei die Polyamide mit verarbeitungs- oder verwendungsbedingten Additiven modifiziert sein können.

15. Polymerrohrleitung gemäß Anspruch 11, dadurch gekennzeichnet, daß die gegenüber Druck und mechanischen Einflüssen beständige Schicht aus einem Blend oder Mischung aus einem Homopolyamid oder einem Copolyamid und Polyphenylenether (PPE) besteht.

16. Polymerrohrleitung gemäß einem der vorhergehenden Ansprüche 10 bis 15, dadurch gekennzeichnet, daß die Außenschicht aus thermoplastischen Elastomeren (TPE), wie Polyamid-Elastomere (TPE-A), Polyesterelastomere (TPE-E), Polyolefin-Elastomere (TPE-O), Styrolelastomere (TPE-S) oder deren Mischungen oder Blends, welche funktionelle, mit der benachbarten Schicht verträglich machende Gruppe aufweisen können, besteht.

17. Polymerrohrleitung gemäß einem der Ansprüche 11 bis 16, dadurch gekennzeichnet, daß die innere Schicht aus halogenierten oder nicht-halogenierten Homo- oder Copolyolefinen, aus Mischungen oder Blends derselben besteht, welche funktionelle, mit der äußeren Schicht verträglich machende Gruppen aufweisen können.

18. Polymerrohrleitung gemäß einem der Ansprüche 11 bis 16, dadurch gekennzeichnet, daß die innere Schicht aus Homo- oder Copolyolefinen, aus Mischungen oder Blends derselben, die funktionelle, mit der äußeren Schicht verträglich machende Gruppen aufweisen können, und die vernetzte Gummipartikel dispers verteilt haben, besteht.

19. Polymerrohrleitung gemäß Anspruch 18, dadurch gekennzeichnet, daß die vernetzten Kautschukpartikel Ethylen-Propylen-Terpolymerisate (EPDM), Nitrilkautschuk (NBR) und/oder Ethylen-Propylen-Copolymere (EPM) sind.

20. Polymerrohrleitung gemäß einem der Ansprüche 11 bis 16, dadurch gekennzeichnet, daß die innere Schicht aus einem Silan-vernetzten, halogenierten oder nicht halogenierten Homo- oder Copolyolefin, aus Mischungen oder Blends derselben besteht, welche funktionelle, mit der äußeren Schicht verträglich machende Gruppen aufweisen können.

21. Polymerrohrleitung gemäß einem der vorhergehenden Ansprüche 11 bis 16, dadurch gekennzeichnet, daß die innere Schicht aus Polyphenylensulfid (PPS), aus Mischungen oder Blends derselben besteht, welche(s) funktionelle, mit der äußeren Schicht verträglich machende Gruppen aufweisen kann (können).

22. Polymerrohrleitung gemäß einem der vorhergehenden Ansprüche 11 bis 16, dadurch gekennzeichnet, daß die innere Schicht aus Polyester, wie Polybutylenterephthalat (PBT), besteht.

23. Polymerrohrleitung gemäß einem der Ansprüche 11 bis 16, dadurch gekennzeichnet, daß die innere Schicht aus Homo- oder Copolyvinylchlorid, Mischungen oder Blends derselben besteht.

24. Polymerrohrleitung gemäß einem der Ansprüche 11 bis 16, dadurch gekennzeichnet, daß die innere Schicht aus Homo- oder Copolyactalen, wie Homo- oder Copolyoxymethylen (POM), oder Mischungen oder Blends derselben, besteht.

25. Polymerrohrleitungen gemäß einem der Ansprüche 11 bis 16, dadurch gekennzeichnet, daß die innere Schicht aus Polyolefin-Elastomeren (TPE-O) oder deren Mischungen oder Blends, welche funktionelle, mit der benachbarten Schicht verträglich machende Gruppen aufweisen können, besteht.

26. Polymerrohrleitung gemäß einem der vorhergehenden Ansprüche 11 bis 25, dadurch gekennzeichnet, daß die innere Schicht aus mit der äußeren Schicht ungenügend verträglich halogenierten oder nicht-halogenierten Homo- oder Copolyolefinen besteht, und wobei eine mit diesen beiden Schichten verträgliche Zwischenschicht angeordnet ist, wobei die Zwischenschicht im wesentlichen ein gepfropftes Polyolefin, ein gepfropftes oder durch Copolymerisation mit funktionellen Gruppen versehenen Copolyolefin oder deren Blends mit nicht-funktionalisierten Polymeren oder ein Blend aus den miteinander zu verbindenden Polymeren und gegebenenfalls weitere Polymeren ist.

27. Polymerrohrleitung gemäß Anspruch 17, dadurch gekenzeichnet, daß die innere Schicht aus einem Copolyolefin mit aufgepfropften alpha-ungesättigten Dicarbonsäuren, das teilweise durch ungepfropftes Polyolefin ersetzt sein kann, besteht, und daß die gegenüber Druck und mechanischen Einflüssen beständige Schicht ein modifiziertes oder unmodifiziertes Polyamid 12 ist.

28. Polymerrohrleitung gemäß einem der vorhergehenden Ansprüche 11 bis 27, dadurch gekennzeichnet, daß die innere Schicht aus PVDF besteht, die gegenüber Druck und mechanischen Einflüssen beständige Schicht aus modifiziertem Polyamid 6 oder Polyamid 12 besteht, und die Zwischenschicht ein Blend aus den Polymeren der Innen- und der gegenüber Druck und mechanischen Einflüssen beständigen Schicht ist.

29. Polymerrohrleitung gemäß Anspruch 26, dadurch gekennzeichnet, daß die Innenschicht ein Blend aus einem Polyolefin oder Copolyolefin mit einem EPDM, die Zwischenschicht ein funktionalisiertes Polyolefin oder Copolyolefin und die gegenüber Druck und mechanischen Einflüssen beständige Schicht ein modifiziertes oder unmodifiziertes Polyamid 12 ist.

30. Verfahren zur Herstellung einer Polymerrohrleitung gemäß einem der vorhergehenden Ansprüche 1 bis 29, durch Coextrusion eines Polymerrohres und anschließender Ausbildung der Wellungen samt Abflachungen durch Blas- oder Saugformen.

31. Verfahren zur Herstellung einer Polymerrohrleitung gemäß einem der vorhergehenden Ansprüche 1 bis 29, durch Extrusionsblasformen, Coextrusionsblasformen, sequentielles Blasformen mit oder ohne Schlauchmanipulationen.

## Claims

1. Polymeric pipe made from at least one polymeric layer, where the pipe is corrugated at least in one section, and the rings formed by the corrugations run around the axis of the pipe, characterized in that the rings are formed at least to some extent in the shape of an oval or in the shape of an ellipse or in the shape of a circle which is flattened off on at least one side.

2. Polymeric pipe according to Claim 1, characterized in that each ring is formed with flattening-off on at least one side, or as an ellipse or as an oval.

3. Polymeric pipe according to Claim 1 or 2, characterized in that the flattening-off or the short semiaxis of the ellipse or of the oval is continuously displaced by a defined angle from ring to ring.

4. Polymeric pipe according to one of Claims 1 to 3, characterized in that it is composed of a pressure-resistant layer of polymers which are selected from the group which encompasses homo- and/or copolyamides, homo- and/or copolyesters, polyphenylene sulphide (PPS) and/or its copolymers, polyvinylidene fluoride (PVDF) and/or its copolymers, halogenated and non-halogenated polyolefins, and/or their copolymers, and polyphenylene ether (PPE) and/or their mixtures and/or blends.

5. Polymeric pipe according to Claim 4, characterized in that the polyester is polybutylene terephthalate or polyethylene terephthalate or their copolymers or mixtures and/or blends of the same.

6. Polymeric pipe according to Claim 4, characterized in that the homo- or copolyamides are built up from linear aliphatic monomers having from 6 to 12 carbon atoms or from cycloaliphatic monomers having from 6 to 20 carbon atoms.

7. Polymeric pipe according to Claim 6, characterized in that the homopolyamide is a polyamide-6, polyamide-6,6 or polyamide-12, where the polyamides may be modified, as required by their processing or by their use, with additives.

8. Polymeric pipe according to Claim 4, characterized in that the polyolefin is an ethylenetetrafluoroethylene, a polypropylene, a crosslinked or uncrosslinked polyethylene, such as HDPE, LDPE or LLDPE, poly-1-butene or poly-4-methylpentene.

9. Polymeric pipe according to Claim 4, characterized in that the polymer is a mixture and/or a blend of polyphenylene ether and homo- or copolyamides.

10. Polymeric pipe according to one of Claims 1 to 9, characterized in that it is composed of at least one inner layer, at least one, if desired adhesion-promoting, intermediate layer and at least one outer layer, where the at least one intermediate layer may additionally have a barrier function.

11. Polymeric pipe according to one of Claims 1 to 10, characterized in that it is at least composed of an inner layer which is inert to the medium conveyed and a layer which is resistant to pressure and mechanical effects.

12. Polymeric pipe according to Claim 11, characterized in that the layer resistant to pressure and mechanical effects is composed a homopolyamide or of a copolyamide or of their blends or mixtures with one another or with other polymers.

13. Polymeric pipe according to Claim 12, characterized in that the homo- or copolyamides are built up from linear aliphatic monomers having from 6 to 12 carbon atoms or from cycloaliphatic monomers having from 6 to 20 carbon atoms.

14. Polymeric pipe according to Claim 12, characterized in that the homopolyamide is a polyamide-6, a polyamide-6,6 or a polyamide-12, where the polyamides may be modified, as required by their processing or by their use, with additives.

15. Polymeric pipe according to Claim 11, characterized in that the layer resistant to pressure and mechanical effects is composed of a blend or mixture of a homopolyamide or of a copolyamide and polyphenylene ether (PPE).

16. Polymeric pipe according to one of the preceding Claims 10 to 15, characterized in that the outer layer is composed of thermoplastic elastomers (TPE), such as polyamide elastomers (TPE-A), polyester elastomers (TPE-E), polyolefin elastomers (TPE-O), styrene elastomers (TPE-S) or their mixtures or blends which may have functional groups giving compatibility with the adjacent layer.

17. Polymeric pipe according to one of Claims 11 to 16, characterized in that the inner layer is composed of halogenated or non-halogenated homo- or copolyolefins, of mixtures or of blends of the same, which may have functional groups giving compatibility with the outer layer.

18. Polymeric pipe according to one of Claims 11 to 16, characterized in that the inner layer is composed of homo- or copolyolefins, of mixtures or of blends of the same, which may have functional groups giving compatibility with the outer layer, and which have dispersed crosslinked rubber particles.

19. Polymeric pipe according to Claim 18, characterized in that the crosslinked rubber particles are ethylene-propylene terpolymers (EPDM), nitrile rubber (NBR) and/or ethylene-propylene copolymers (EPM).

20. Polymeric pipe according to one of Claims 11 to 16, characterized in that the inner layer is composed of a silane-crosslinked, halogenated or non-halogenated homo- or copolyolefin, of mixtures or of blends of the same, which may have functional groups giving compatibility with the outer layer.

21. Polymeric pipe according to one of the preceding Claims 11 to 16, characterized in that the inner layer is composed of polyphenylene sulphide (PPS), of mixtures or of blends of the same, which may have functional groups giving compatibility with the outer layer.

22. Polymeric pipe according to one of the preceding Claims 11 to 16, characterized in that the inner layer is composed of polyester, such as polybutylene terephthalate (PBT).

23. Polymeric pipe according to one of Claims 11 to 16, characterized in that the inner layer is composed of homo- or copolyvinyl chloride, of mixtures or of blends of the same.

24. Polymeric pipe according to one of Claims 11 to 16, characterized in that the inner layer is composed of homo- or copolyacetals, such as homo- or copolyoxy-methylene (POM), or mixtures or blends of the same.

25. Polymeric pipe according to one of Claims 11 to 16, characterized in that the inner layer is composed of polyolefin elastomers (TPE-O) or their mixtures or blends, which may have functional groups giving compatibility with the adjacent layer.

26. Polymeric pipe according to one of the preceding Claims 11 to 25, characterized in that the inner layer is composed of halogenated or non-halogenated homo- or copolyolefins which are insufficiently compatible with the outer layer, and where the arrangement has an intermediate layer compatible with these two layers, where the intermediate layer is essentially a grafted polyolefin, a grafted copolyolefin, a copolyolefin provided with functional groups through copolymerization, or their blends with non-functionalized polymers, or a blend of the polymers which are to be bonded to one another and, if desired, other polymers.

27. Polymeric pipe according to Claim 17, characterized in that the inner layer is composed of a copolyolefin grafted onto which are alpha-unsaturated dicarboxylic acids and which may be replaced to some extent by ungrafted polyolefin, and in that the layer which is resistant to pressure and mechanical effects is a modified or unmodified polyamide-12.

28. Polymeric pipe according to one of the preceding Claims 11 to 27, characterized in that the inner layer is composed of PVDF, the layer which is resistant to pressure and mechanical effects is composed of modified polyamide-6 or polyamide-12 and the intermediate layer is a blend of the polymers of the inner layer and of the layer which is resistant to pressure and mechanical effects.

29. Polymeric pipe according to Claim 26, characterized in that the inner layer is a blend of a polyolefin or copolyolefin with an EPDM, the intermediate layer is a functionalized polyolefin or copolyolefin, and the layer which is resistant to pressure and mechanical effects is a modified or unmodifiedpolyamide-12.

30. Method for manufacturing a polymeric pipe according to one of the preceding Claims 1 to 29, by coextruding a pipe made from polymer and then forming the corrugations together with the flattened-off areas by blow moulding or vacuum moulding.

31. Method for manufacturing a polymeric pipe according to one of the preceding Claims 1 to 29 by extrusion blow moulding, coextrusion blow moulding or sequential blow moulding with or without manipulations of the tube.

## Revendications

1. Tuyau en polymère formé d'au moins une couche de polymère, ce tuyau étant ondulé sur au moins une portion et les segments formés par les ondulations s'étendant autour de l'axe du tuyau, caractérisé en ce que les anneaux ou segments sont réalisés au moins en partie en forme d'ovale ou en forme d'ellipse ou en forme de cercle aplati sur au moins un côté.

2. Tuyau en polymère suivant la revendication 1, caractérisé en ce que chaque segment est aplati au moins d'un côté ou réalisé en forme d'ellipse ou d'ovale.

3. Tuyau en polymère suivant la revendication 1 ou 2, caractérisé en ce que l'aplatissement ou le demi-axe court de l'ellipse ou de l'ovale est décalé d'un angle défini, de façon continue, de segment en segment.

4. Tuyau en polymère suivant l'une des revendications 1 à 3, caractérisé en ce qu'il est constitué d'une couche, résistant à la pression, de polymères qui sont choisis dans le groupe qui comprend des homopolyamides et/ou des copolyamides, des homopolyesters et/ou des copolyesters, un polyphénylène-sulfure (PPS) et/ou ses copolymères, un polyvinylidène-fluorure (PVDF) et/ou ses copolymères, des polyoléfines halogénées et non halogénées et/ou leurs copolymères, et un polyphénylène-éther (PPE) et/ou des mélanges ou "blends" de ces polymères.

5. Tuyau en polymère suivant la revendication 4, caractérisé en ce que le polyester est un polybutylène-téréphtalate ou un polyéthylène-téréphtalate ou des copolymères ou des mélanges ou "blends" de ces polyesters.

6. Tuyau en polymère suivant la revendication 4, caractérisé en ce que les homopolyamides ou copolyamides sont édifiés à partir de monomères aliphatiques linéaires ayant 6 à 12 atomes de carbone ou de monomères cyclo-aliphatiques ayant 6 à 20 atomes de carbone.

7. Tuyau en polymère suivant la revendication 6, caractérisé en ce que l'homopolyamide est un Polyamide 6, un Polyamide 66 ou un Polyamide 12, les polyamides pouvant être modifiés avec des additifs conditionnés par la mise en oeuvre ou l'utilisation.

8. Tuyau en polymère suivant la revendication 4, caractérisé en ce que la polyoléfine est un éthylène-tétrafluoréthylène, un polypropylène, un polyéthylène réticulé ou non réticulé tel qu'un PEHD, un PEBD, un PELBD, un polybutène-1, un poly-4-méthylpentène.

9. Tuyau en polymère suivant la revendication 4, caractérisé en ce que le polymère est un mélange ou un "blend" de polyphénylène-éther et d'homopolyamides ou de copolyamides.

10. Tuyau en polymère suivant l'une des revendications 1 à 9, caractérisé en ce qu'il est constitué d'au moins une couche interne, d'au moins une couche intermédiaire éventuellement adhésive et d'au moins une couche externe, la couche ou les couches intermédiaires pouvant avoir en outre une fonction de barrière.

11. Tuyau en polymère suivant l'une des revendications 1 à 10, caractérisé en ce qu'il est constitué d'au moins une couche interne inerte vis-à-vis du fluide transporté et d'une couche stable à la pression et aux influences mécaniques.

12. Tuyau en polymère suivant la revendication 11, caractérisé en ce que la couche stable à la pression et aux influences mécaniques est constituée d'un homopolyamide ou d'un copolyamide ou de leurs "blends" ou mélanges entre eux ou avec d'autres polymères.

13. Tuyau en polymère suivant la revendication 12, caractérisé en ce que les homopolyamides ou copolyamides sont édifiés à partir de monomères aliphatiques linéaires ayant 6 à 12 atomes de carbone ou à partir de monomères cyclo-aliphatiques ayant 6 à 20 atomes de carbone.

14. Tuyau en polymère suivant la revendication 12, caractérisé en ce que l'homopolyamide est un Polyamide 6, un Polyamide 66 ou un Polyamide 12, les polyamides pouvant être modifiés avec des additifs conditionnés par la mise en oeuvre ou l'utilisation.

15. Tuyau en polymère suivant la revendication 11, caractérisé en ce que la couche stable à la pression et aux influences mécaniques est constituée d'un "blend" ou d'un mélange d'un homopolyamide ou d'un copolyamide et de polyphénylène-éther (PPE).

16. Tuyau en polymère suivant l'une des revendications 10 à 15 précédentes, caractérisé en ce que la couche externe est constituée d'élastomères thermoplastiques (TPE) tels que des élastomères de polyamides (TPE-A), des élastomères de polyesters (TPE-E), des élastomères de polyoléfines (TPE-O), des élastomères de styrène (TPE-S) ou leurs mélanges ou "blends", qui peuvent porter des groupes fonctionnels de compatibilisation avec la couche adjacente.

17. Tuyau en polymère suivant l'une des revendications 11 à 16, caractérisé en ce que la couche interne est constituée d'homopolyoléfines ou de copolyoléfines halogénées ou non halogénées, de mélanges ou de "blends" de ces polyoléfines, qui peuvent porter des groupes fonctionnels de compatibilisation avec la couche externe.

18. Tuyau en polymère suivant l'une des revendications 11 à 16, caractérisé en ce que la couche interne est constituée d'homopolyoléfines ou de copolyoléfines, de leurs mélanges ou de leurs "blends", qui peuvent porter des groupes fonctionnels de compatibilisation avec la couche externe et qui contiennent des particules de caoutchouc réticulé réparties en dispersion.

19. Tuyau en polymère suivant la revendication 18, caractérisé en ce que les particules de caoutchouc réticulé sont des terpolymères d'éthylène-propylène (EPDM), un caoutchouc nitrilique (NBR) et/ou des copolymères d'éthylène-propylène (EPM).

20. Tuyau en polymère suivant l'une des revendications 11 à 16, caractérisé en ce que la couche interne est constituée d'une homopolyoléfine ou d'une copolyoléfine halogénée ou non halogénée, réticulée avec un silane, de mélanges ou de "blends" de ces polyoléfines, qui peuvent porter des groupes fonctionnels de compatibilisation avec la couche externe.

21. Tuyau en polymère suivant l'une des revendications 11 à 16 précédentes, caractérisé en ce que la couche interne est constituée d'un polyphénylène-sulfure (PPS), de mélanges ou de "blends" de polymères de ce type, qui peut (peuvent) porter des groupes fonctionnels de compatibilisation avec la couche externe.

22. Tuyau en polymère suivant l'une des revendications 11 à 16 précédentes, caractérisé en ce qu'il est constitué d'une couche interne en polyester, tel qu'un polybutylène-téréphtalate (PBT).

23. Tuyau en polymère suivant l'une des revendications 11 à 16, caractérisé en ce que la couche interne est constituée d'un homopolymère ou d'un copolymère de chlorure de vinyle, de leurs mélanges ou leurs "blends".

24. Tuyau en polymère suivant l'une des revendications 11 à 16, caractérisé en ce que la couche interne est constituée d'homopolyacétals ou de copolyacétals tels qu'un homo- ou un copolyoxyméthylène (POM) ou de leurs mélanges ou "blends".

25. Tuyau en polymère suivant l'une des revendications 11 à 16, caractérisé en ce que la couche interne est constituée d'élastomères de polyoléfines (TPE-O) ou de leurs mélanges ou "blends", qui peuvent porter des groupes fonctionnels de compatibilisation avec la couche adjacente.

26. Tuyau en polymère suivant l'une des revendications 11 à 25 précédentes, caractérisé en ce que la couche interne est constituée d'homopolyoléfines ou de copolyoléfines halogénées ou non halogénées dans une mesure insuffisamment compatible avec la couche externe, et une couche intermédiaire compatible avec ces deux couches est disposée, la couche intermédiaire étant principalement une polyoléfine greffée, une copolyoléfine greffée ou pourvue de groupes fonctionnels par copolymérisation ou leurs "blends" avec des polymères non porteurs de groupes fonctionnels ou un "blend" formé des polymères devant être liés ensemble et, le cas échéant, d'autres polymères.

27. Tuyau en polymère suivant la revendication 17, caractérisé en ce que la couche interne est constituée d'une copolyoléfine, sur laquelle sont greffés des acides dicarboxyliques alpha-insaturés, qui peut être en partie remplacée par une polyoléfine non greffée, et en ce que la couche stable à la pression et aux influences mécaniques est un Polyamide 12 modifié ou non modifié.

28. Tuyau en polymère suivant l'une des revendications 1 à 27 précédentes, caractérisé en ce que la couche interne est constituée de PVDF, la couche stable à la pression et aux influences mécaniques est constituée de Polyamide 12 ou de Polyamide 6 modifié et la couche intermédiaire est un "blend" des polymères de la couche interne et de la couche stable à la pression et aux influences mécaniques.

29. Tuyau en polymère suivant la revendication 26, caractérisé en ce que la couche interne est un "blend" d'une polyoléfine ou d'une copolyoléfine avec un EPDM, la couche intermédiaire est une polyoléfine ou une copolyoléfine fonctionnalisée et la couche stable à la pression et aux influences mécaniques est un Polyamide 12 modifié ou non modifié.

30. Procédé de production d'un tuyau en polymère suivant l'une des revendications 1 à 29 précédentes, par coextrusion d'un tuyau en polymère suivie de la réalisation des ondulations ainsi que des parties aplaties par moulage par soufflage ou aspiration.

31. Procédé de production d'un tuyau en polymère suivant l'une des revendications précédentes 1 à 29, par moulage par soufflage et extrusion, moulage par soufflage et coextrusion, moulage séquentiel par soufflage avec ou sans manipulation du tuyau souple.
